# EUROPÄISCHE PATENTSCHRIFT

(11) **EP 3 974 295 B1**
(45) Veröffentlichungstag und Bekanntmachung des Hinweises auf die Patenterteilung: **31.01.2024**
(21) Anmeldenummer: 21189069.4
(22) Anmeldetag: 02.08.2021
(51) Int. Cl.: B62D 25/16, B62D 25/18

(54) **KOTFLÜGELSYSTEM FÜR EINE LANDWIRTSCHAFTLICHE ARBEITSMASCHINE SOWIE LANDWIRTSCHAFTLICHE ARBEITSMASCHINE**
AGRICULTURAL WORKING MACHINE AND WING SYSTEM FOR AN AGRICULTURAL WORKING MACHINE
SYSTÈME DE GARDE-BOUE POUR MACHINE DE TRAVAIL AGRICOLE, AINSI QUE MACHINE DE TRAVAIL AGRICOLE

(30) Priorität: 29.09.2020 DE 102020125420
(43) Veröffentlichungstag der Anmeldung: 30.03.2022
(73) Patentinhaber: CLAAS Tractor S.A.S., 78141 Vélizy-Villacoublay Cedex (FR)
(72) Erfinder: Kla, Mourad, 95100 Argenteuil (FR); Touileb, Youcef, 94500 Champigny sur marne (FR)
(74) Vertreter: CLAAS Gruppe

(56) Entgegenhaltungen:
- EP-A1- 3 218 247
- JP-B2- 4 195 135
- KR-Y1- 200 411 026
- US-A- 2 603 511

## Beschreibung

Die vorliegende Anmeldung betrifft ein Kotflügelsystem für eine landwirtschaftliche Arbeitsmaschine gemäß dem Oberbegriff von Anspruch 1. Des Weiteren betrifft die Anmeldung eine landwirtschaftliche Arbeitsmaschine nach Anspruch 5.

Das Kotflügelsystem umfasst einen Kotflügel zur teilweisen Einfassung eines Rades der Arbeitsmaschine. Zur Befestigung des Kotflügels an der Arbeitsmaschine weist das Kotflügelsystem eine Befestigungseinrichtung auf. Die Befestigungseinrichtung weist dabei zumindest einen Festabschnitt zur Verbindung mit der Arbeitsmaschine und einen Bewegungsabschnitt auf, wobei der Kotflügel dem Bewegungsabschnitt zugeordnet ist. Typischerweise ist der Festabschnitt dabei nicht relativ zu dem Rad der Arbeitsmaschine bewegbar. Mit anderen Worten wird der Festabschnitt bei einer Lenkbewegung mit dem Rad der Arbeitsmaschine mitgedreht, sodass der Kotflügel das Rad auch bei einer Lenkbewegung zumindest teilweise einfasst.

Der Bewegungsabschnitt der Befestigungseinrichtung ist relativ zu dem Festabschnitt der Befestigungseinrichtung bewegbar. Mittels einer Feststelleinrichtung des Kotflügelsystems ist die Befestigungseinrichtung feststellbar. Dabei ist der Bewegungsabschnitt der Befestigungseinrichtung zumindest bei Vorliegen des Kotflügels in einer Serviceposition mittels der Feststelleinrichtung relativ zu dem Festabschnitt der Befestigungseinrichtung arretierbar.

Bekannte Kotflügel werden typischerweise dazu eingesetzt, die Räder der landwirtschaftlichen Arbeitsmaschine zumindest teilweise abzudecken, sodass eine Aufwirbelung von Erde eines mittels der Arbeitsmaschine zu bearbeitenden Felds, die eine Sichtverschlechterung für einen Fahrer der Arbeitsmaschine zur Folge haben kann, verhindert wird. Darüber hinaus kann verhindert werden, dass - sofern die landwirtschaftliche Arbeitsmaschine auf einer Straße unterwegs ist - Wasser und Schmutz von einer Fahrbahnfläche aufgewirbelt werden und weitere Verkehrsteilnehmer sowie vorbeigehende Passanten behindern.

In aller Regel sind die Kotflügel dabei um eine vertikal orientierte Drehachse drehbar, um den Kotflügel von einer Betriebsposition, in der der Kotflügel oberhalb des Rads angeordnet ist, von der Arbeitsmaschine wegdrehen zu können. In dieser Serviceposition des Kotflügels ist der Kotflügel derart von der Arbeitsmaschine weggedreht, dass ein Zugang zu der landwirtschaftlichen Arbeitsmaschine freigegeben ist, um beispielsweise Wartungs- oder Inspektionsarbeiten durchführen zu können.

Typischerweise weisen bekannte Kotflügelsysteme eine Rückstelleinrichtung auf, die den Kotflügel bei Vorliegen in einer von einer Betriebsposition abweichenden Position zurück in die Betriebsposition überführen. In der Betriebsposition ist der Kotflügel oberhalb des zugehörigen Rads angeordnet. Die Rückstelleinrichtung kann dabei beispielsweise in Form einer Feder ausgebildet sein, die im Zuge einer Überführung des Kotflügels in eine von der Betriebsposition abweichende Position ausgelenkt wird. Mittels der Rückstellkraft der Feder kann der Kotflügel zurück in die Betriebsposition überführt werden.

Um den Kotflügel in der Serviceposition zu halten, wird der Kotflügel typischerweise von der Arbeitsmaschine weggedreht. Die Serviceposition wird dann mittels eines Werkzeugs, beispielsweise eines Schraubenziehers, arretiert, wobei das Werkzeug verhindert, dass sich der Kotflügel in seine Betriebsposition zurückdreht.

Kotflügelsysteme der vorbeschriebenen Art sind im Stand der Technik bereits bekannt. Hierzu wird insbesondere auf die internationale Patentanmeldung WO 2018/229048 A1 verwiesen. Die genannte Schrift schlägt ein Kotflügelsystem vor, das eine Feststelleinrichtung, umfassend einen Festabschnitt und einen Bewegungsabschnitt, aufweist, bei dem der Kotflügel der Arbeitsmaschine mittels eines Sicherungsstifts in einer Serviceposition gehalten werden kann. Der Sicherungsstift ist dabei mittels eines Hebels ausfahrbar. Ein Verwender des Kotflügelsystems muss den Kotflügel somit zunächst händisch in die Serviceposition überführen, in dieser Position halten und die Position schließlich mittels einer Betätigung des Hebels sichern.

Die bekannte Ausgestaltung ist insoweit nachteilig, als eine Arretierung des Kotflügels in seiner Serviceposition händisch erfolgen muss. Ein Verwender des Kotflügelsystems muss den Kotflügel mithin zum einen in die Serviceposition überführen. Zum anderen muss in diesem Zuge auch der Hebel betätigt werden. Sofern es dem Verwender nicht gelingt, den Kotflügel in der Serviceposition zu halten, bevor er den Hebel betätigt hat, wird der Kotflügel automatisch zurück in die Betriebsposition überführt. Sollte sich der Verwender dabei zwischen dem Kotflügel und der landwirtschaftlichen Arbeitsmaschine befinden, kann es zu Verletzungen kommen. Um den Kotflügel anschließend ausgehend von der Serviceposition wieder in die Betriebsposition überführen zu können, muss der Hebel wieder betätigt werden, um den Sicherungsstift zu lösen. Auch dies muss händisch erfolgen.

Ein weiteres Kotflügelsystem mit einer Feststelleinrichtung, die einen Sicherungsstift umfasst, der zum Überführen des Kotflügels aus der Serviceposition in die Betriebsposition händisch gelöst bzw. betätigt werden muss, ist aus der KR200411026Y1 bekannt.

Der vorliegenden Aufgabe liegt mithin die Aufgabe zugrunde, ein Kotflügelsystem für eine landwirtschaftliche Arbeitsmaschine mit einer vereinfachten Arretierung des Kotflügels in seiner Serviceposition bereit zu stellen.

Die zugrunde liegende Aufgabe wird erfindungsgemäß mit einem Kotflügelsystem mit den Merkmalen des Anspruchs 1 gelöst. Vorteilhafte Ausgestaltungen ergeben sich aus den zugehörigen Unteransprüchen.

Erfindungsgemäß ist vorgesehen, dass die Feststelleinrichtung als selbst-verriegelndes System eingerichtet ist, das den Bewegungsabschnitt bei Vorliegen des Kotflügels in dessen Serviceposition selbsttätig relativ zu dem Festabschnitt arretiert.

Als "Betriebsposition" im Sinne der vorliegenden Erfindung wird eine Position des Kotflügels verstanden, in der der Kotflügel derart oberhalb eines Rads der Arbeitsmaschine angeordnet ist, dass der Kotflügel das Rad zumindest teilweise einfasst.

Als "Serviceposition" im Sinne der vorliegenden Erfindung wird eine Position des Kotflügels verstanden, in der der Kotflügel derart von der Arbeitsmaschine entfernt angeordnet, insbesondere von der Arbeitsmaschine weggedreht ist, dass ein Zugang zu der Arbeitsmaschine im Bereich des Rads der Arbeitsmaschine ermöglicht ist, sodass Wartungs- und Inspektionsarbeiten durchführbar sind.

Ein Festabschnitt einer Befestigungseinrichtung des Kotflügelsystems ist dabei vorzugsweise lediglich im Hinblick auf eine Bewegung eines Bewegungsabschnitts der Befestigungseinrichtung fest. Vorzugsweise kann vorgesehen sein, dass der Festabschnitt relativ zu dem Rad der Arbeitsmaschine bewegbar ist. Dies ist insbesondere dann von Vorteil, wenn der Kotflügel bei einer Lenkbewegung, bei der das Rad gedreht wird, ebenfalls gedreht werden soll, sodass der Kotflügel zu jeder Zeit oberhalb des Rads angeordnet ist. Ebenso ist jedoch auch vorstellbar, dass der Kotflügel lediglich bei einem Geradeausfahren über dem Rad angeordnet ist und sich das Rad bei einer Lenkbewegung unter dem Kotflügel wegdreht.

Das erfindungsgemäße Kotflügelsystem hat viele Vorteile. Insbesondere ermöglicht die selbstständige Arretierung des Kotflügels in dessen Serviceposition, den Kotflügel automatisch, d.h. ohne händisches Zutun, in der Serviceposition zu halten. Auf diese Weise ist es nicht länger nötig, den Kotflügel in die Serviceposition zu überführen und zugleich für dessen Arretierung zu sorgen. Ein Verwender des Kotflügelsystems kann hierdurch vorzugsweise von außen an den Kotflügel herantreten und den Kotflügel in die Serviceposition bewegen, um Wartungs- oder Inspektionsarbeiten durchführen zu können, wobei der Kotflügel mittels der Feststelleinrichtung automatisch in die Serviceposition überführbar ist. Insbesondere muss der Verwender nicht um den Kotflügel herum treten, um an die Befestigungseinrichtung des Kotflügels an der Arbeitsmaschine zu gelangen und somit eine Arretierung mittels einer Betätigung eines Hebels oder einer Blockierung mittels eines Werkzeugs zu bewirken. Vorzugsweise ist dabei vorgesehen, dass der Kotflügel auch ausgehend von seiner Serviceposition besonders einfach, vorzugsweise automatisiert, zurück in seine Betriebsposition, in der der Kotflügel das Rad der Arbeitsmaschine zumindest teilweise einfasst, überführbar ist.

Erfindungsgemäß ist vorgesehen, dass die Feststelleinrichtung an einem von Festabschnitt oder Bewegungsabschnitt, vorzugsweise am Festabschnitt, eine mit einer Feder vorgespannte Kugel und an dem anderen von Festabschnitt oder Bewegungsabschnitt, vorzugsweise dem Bewegungsabschnitt, eine mit der Kugel korrespondierende Ausnehmung aufweist. Die Feder kann vorzugsweise in Form einer Springfeder ausgebildet sein. Ebenso ist jedoch auch vorstellbar, dass die Feder als Blattfeder ausgebildet ist. Dabei ist gemäß einer vorzugsweisen Ausgestaltung der Erfindung vorgesehen, dass die Feder in Richtung der Ausnehmung vorgespannt ist, sodass sie dazu geeignet ist, die Kugel in die Ausnehmung zu drücken und auf diese Weise einen gewünschten Formschluss herzustellen, sobald der Kotflügel seine Serviceposition erreicht. In jedem Fall ermöglicht die Feder eine Vorspannung der Kugel in der Art, dass die Kugel ohne Vorliegen einer Gegenkraft oder eines Anschlags in Richtung einer Auslenkungsrichtung der Feder bewegbar ist. Auf diese Weise kann die Kugel - sofern die Ausnehmung oberhalb der Kugel angeordnet ist - in die Ausnehmung eingedrückt werden, einen Formschluss herstellen und den Kotflügel somit in der Serviceposition arretieren.

Weiterhin ist erfindungsgemäß vorgesehen, dass ein Durchmesser der Kugel einen Durchmesser der Ausnehmung übersteigt. Auf diese Weise kann sichergestellt werden, dass die Kugel lediglich bis zu einem gedachten "Breitenkreis" in die Ausnehmung eintritt. Hierdurch ist es ermöglicht, dass die Kugel bei einer Relativbewegung zwischen der Kugel und dem Festabschnitt bzw. dem Bewegungsabschnitt, wobei letzterer die korrespondierende Ausnehmung aufweist, entgegen einer Auslenkungsrichtung der Feder bewegbar ist und somit aus der Ausnehmung herausdrückbar ist, um den Kotflügel von seiner Serviceposition in seine Betriebsposition zu überführen. Die Betätigung eines Hebels zur Überführung des Kotflügels von seiner Serviceposition in seine Betriebsposition entfällt mithin. Der Kotflügel ist somit besonders einfach von der Serviceposition in die Betriebsposition überführbar. Dies kann vorzugsweise dadurch erfolgen, dass der Kotflügel in Richtung der Arbeitsmaschine bewegt, insbesondere um eine entsprechende Drehachse, gedreht wird. Im Zuge einer solchen Krafteinwirkung wird der Bewegungsabschnitt relativ zu dem Festabschnitt bewegt, sodass die Kugel zurückgedrängt wird und den Formschluss mit der Ausnehmung aufgibt.

Eine vorzugsweise Ausgestaltung sieht vor, dass die Ausnehmung an einer Rastlasche ausgebildet ist, wobei die Rastlasche in Kraft übertragender Weise an dem Festabschnitt oder dem Bewegungsabschnitt, vorzugsweise dem Bewegungsabschnitt, angeordnet ist. In der Serviceposition des Kotflügels kann mithin ein Formschluss zwischen der Rastlasche und der Kugel der Feststelleinrichtung hergestellt werden.

Eine vorteilhafte Ausgestaltung der Erfindung sieht vor, dass die Feder und die Kugel an einem Tragelement angeordnet sind, wobei das Tragelement in Kraft übertragender Weise dem Festabschnitt oder dem Bewegungsabschnitt, vorzugsweise dem Festabschnitt, zugeordnet ist. Vorzugsweise kann dabei vorgesehen sein, dass das Tragelement eine Durchführung zur Aufnahme der Feder und der Kugel aufweist. Dabei hat es sich als besonders vorteilhaft herausgestellt, wenn die Feststelleinrichtung eine Hohlschraube aufweist, in dessen Innenraum die Feder und die Kugel angeordnet sind, wobei die Hohlschraube vorzugsweise durch die Durchführung des Tragelements hindurchgeführt ist und somit in Kraft übertragender Weise an dem Festabschnitt oder an dem Bewegungsabschnitt anordbar ist.

Die eingangs genannte Aufgabe wird ferner von einer landwirtschaftlichen Arbeitsmaschine, insbesondere einem Traktor, gemäß dem Oberbegriff von Anspruch 5 gelöst. Die landwirtschaftliche Arbeitsmaschine umfasst eine Verbrennungskraftmaschine zum Antrieb der Arbeitsmaschine sowie zwei lenkbare Räder. Bei der Verbrennungskraftmaschine kann es sich insbesondere um einen Hubkolben- oder Rotationskolbenmotor handeln.

Zu Lösung der eingangs genannten Aufgabe wird erfindungsgemäß vorgeschlagen, dass die landwirtschaftliche Arbeitsmaschine zumindest ein Kotflügelsystem aufweist, wobei das Kotflügelsystem einem der Räder zugeordnet ist. Die in Bezug auf das erfindungsgemäße Kotflügelsystem genannten Vorteile werden dabei analog mittels der vorbeschriebenen landwirtschaftlichen Arbeitsmaschine erzielt. Vorzugsweise ist dabei vorgesehen, dass die Arbeitsmaschine zwei Kotflügelsysteme aufweist, die jeweils einem lenkbaren Rad der Arbeitsmaschine zugeordnet sind. Die lenkbaren Räder sind dabei vorzugsweise in einem vorderen Bereich der Arbeitsmaschine angeordnet und mittels eines Lenkrads lenkbar. Dabei kann es besonders von Vorteil sein, wenn die Kotflügelsysteme dabei mit dem lenkbaren Rad mitbewegbar sind, sodass der zugehörige Kotflügel das Rad zu jeder Zeit zumindest teilweise abdeckt und somit verhindern kann, dass an dem Rad anhaftende Erdteile oder andere Staub- oder Schmutzpartikel ausgeschleudert werden.

Die Erfindung ist nachstehend anhand eines Ausführungsbeispiels, das in den Figuren dargestellt ist, näher erläutert. Es zeigt:
- Fig. 1:: eine Draufsicht auf einen Kotflügel einer erfindungsgemäßen Arbeitsmaschine,
- Fig. 2:: wie Figur 1, wobei der Kotflügel in einer Serviceposition vorliegt,
- Fig. 3:: eine perspektivische Ansicht einer Befestigungseinrichtung einer Feststelleinrichtung,
- Fig. 4:: wie Figur 3, wobei der Kotflügel in der Serviceposition vorliegt,
- Fig. 5:: ein schematisches Detail der Befestigungseinrichtung und der Feststelleinrichtung,
- Fig. 6:: einen vertikalen Schnitt durch einen Bewegungsabschnitt der Befestigungseinrichtung und die Feststelleinrichtung und
- Fig. 7:: einen weiteren vertikalen Schnitt durch den Bewegungsabschnitt der Befestigungseinrichtung und die Feststelleinrichtung.

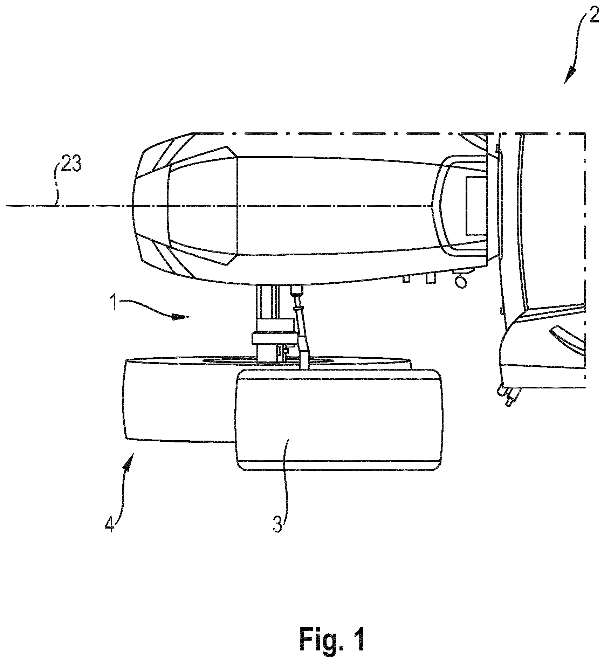

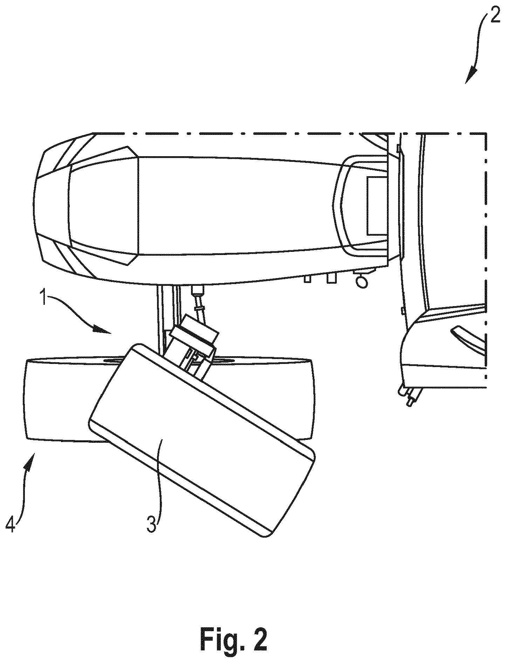

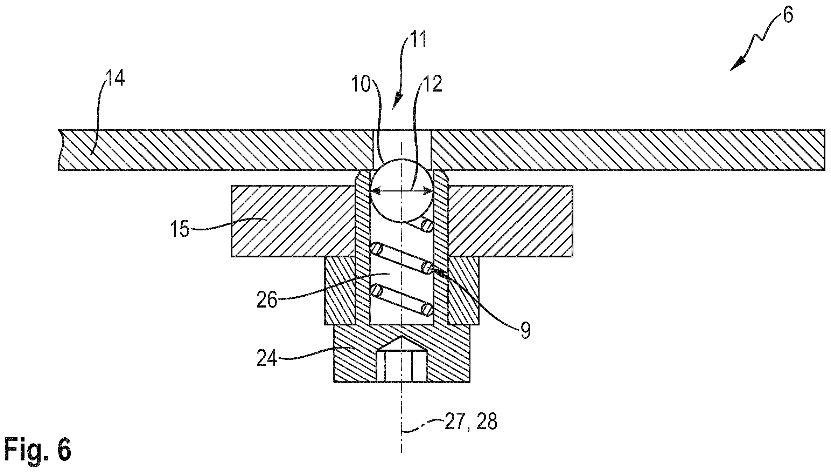

Ein erstes Ausführungsbeispiel, das in den **Figuren 1 bis 7** gezeigt ist, umfasst eine erfindungsgemäße landwirtschaftliche Arbeitsmaschine **2,** die hier in Form eines Traktors ausgebildet ist. Die landwirtschaftliche Arbeitsmaschine **2,** welche gut anhand der **Figuren 1** **und** **2** erkennbar ist, umfasst eine nicht in den Figuren gezeigte Verbrennungskraftmaschine zum Antrieb der Arbeitsmaschine **2,** die in einem Innenraum des Traktors angeordnet ist. Darüber hinaus umfasst der Traktor vier Räder **4,** wobei zwei der in einem vorderen Bereich der Arbeitsmaschine **2** angeordneten Räder **4** mittels eines nicht in den Figuren dargestellten Lenkrads lenkbar sind.

Ferner umfasst die Arbeitsmaschine **2** zwei Kotflügelsysteme **1,** welche in den **Figuren 2 bis 7** gezeigt sind und jeweils einem lenkbaren Rad **4** zugeordnet sind. Jedes der Kotflügelsysteme **1** umfasst einen Kotflügel **3** zur zumindest teilweisen Einfassung des zugeordneten Rads **4** der Arbeitsmaschine **2,** eine Befestigungseinrichtung **5** zur Befestigung des Kotflügels **3** an der Arbeitsmaschine **2** sowie eine Feststelleinrichtung **6** zur Feststellung der Befestigungseinrichtung **5.**

Der Kotflügel **3** dient dazu, von dem zugehörigen Rad 4 bei einer Fahrbewegung der Arbeitsmaschine **2** aufgeschleuderte Erde oder Schlamm abzufangen und somit die Sicht des Fahrers freizuhalten. Der Kotflügel **3** ist dabei zumindest teilweise oberhalb des zugeordneten Rads **4** angeordnet, wie gut anhand von **Figur 1** erkennbar ist.

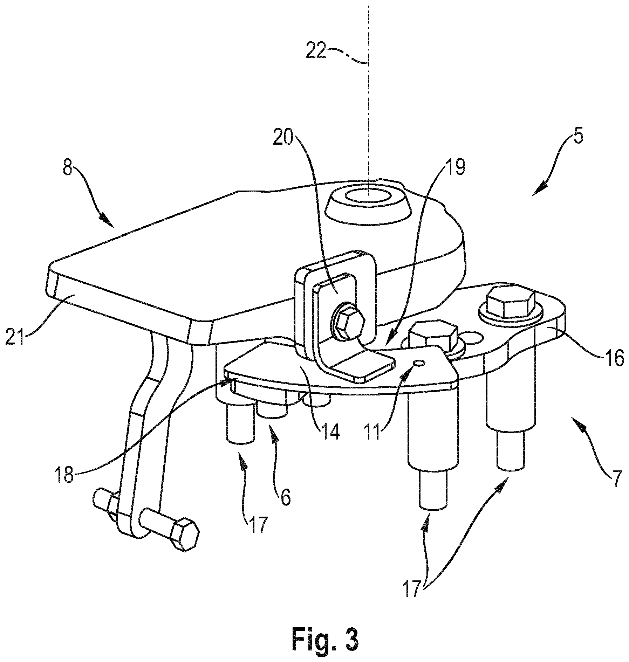

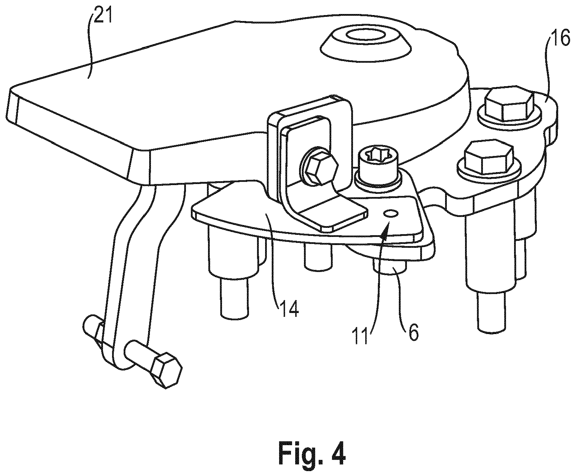

Die Befestigungseinrichtung **5,** welche gut anhand der **Figuren 3** **und** **4** erkennbar ist, weist dabei einen Festabschnitt **7** zur Verbindung mit der Arbeitsmaschine 2 und einen Bewegungsabschnitt **8** auf, dem der Kotflügel **3** zugeordnet ist.

Der Festabschnitt **7** umfasst ein Halteelement **16** sowie mehrere Verbindungselemente **17** zur Befestigung des Kotflügelsystems **1** an den jeweiligen Rad **4,** wie gut anhand der **Figuren 3** **und** **4** erkennbar ist.

An dem Bewegungsabschnitt **8** der Befestigungseinrichtung **5** ist in Kraft übertragender Weise eine Rastlasche **14** angeordnet. Die Rastlasche **14** ist in Form eines Abschnitts eines Kreisrings ausgebildet, folgt also entlang einer Außenkante **18** und einer Innenkante **19** einem Kreisbogen. Die Rastlasche **14** ist mittels eines Winkels **20** mit einem Aufnahmeelement **21** der Befestigungseinrichtung **5** verbunden. Das Aufnahmeelement **21** dient zur Befestigung des Kotflügels **3** an dem Bewegungsabschnitt **8** der Befestigungseinrichtung **5.**

Der Bewegungsabschnitt **8** ist relativ zu dem Festabschnitt **7** bewegbar. Hierzu kann der Bewegungsabschnitt **8** relativ zu dem Festabschnitt **7** um eine vertikal orientierte Drehachse **22** gedreht werden. Auf diese Weise lässt sich der Kotflügel **3** senkrecht zu einer Längsachse **23** der Arbeitsmaschine **2** von der Arbeitsmaschine **2** weg bewegen, um den Kotflügel **3** in seine Serviceposition zu überführen und damit einen Zugang zu der Arbeitsmaschine **2** für Wartungs- und Servicearbeiten zu ermöglichen.

Der Kotflügel **3** ist mithin zwischen einer Betriebsposition, welche in den **Figuren 1** **und** **3** gezeigt ist, und einer Serviceposition, welche in den **Figuren 2** **und** **4** gezeigt ist, überführbar.

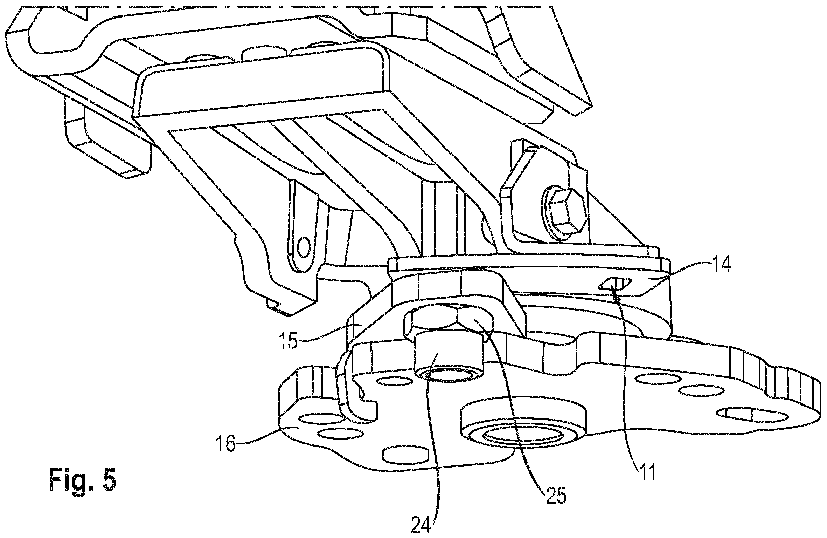

Mittels der Feststelleinrichtung **6** ist der Bewegungsabschnitt **8** in der Serviceposition relativ zu dem Festabschnitt **7** arretierbar. Die Feststelleinrichtung **6** ist dabei als selbst-verriegelndes System ausgebildet, das den Bewegungsabschnitt **8** bei Vorliegen des Kotflügels **3** in dessen Serviceposition selbstständig, das heißt ohne händisches Zutun, relativ zu dem Festabschnitt **7** arretiert. Hierzu weist die Feststelleinrichtung **6,** welche gut anhand der **Figuren 5 bis 7** erkennbar ist, eine Hohlschraube **24** auf, wobei die Hohlschraube **24** wiederum eine Feder **9** und eine am Ende der Feder **9** angeordnete Kugel **10** aufweist. Ferner weist die Feststelleinrichtung **6** ein Tragelement **15** auf sowie eine mit einem nicht in den Figuren dargestellten Gewinde der Hohlschraube **24** korrespondierende Kontermutter **25** auf.

Die Feder **9** ist dabei in einer Durchführung **26** einer Hohlschraube **24** angeordnet, wobei eine Auslenkungsrichtung **27** der Feder **9** einer Längsachse **28** der Hohlschraube **24** entspricht. Weiterhin ist die Feder **9** derart vorgespannt, dass die Kugel **10** ohne eine entsprechende Gegenkraft aus der Hohlschraube **24** herausbewegt wird.

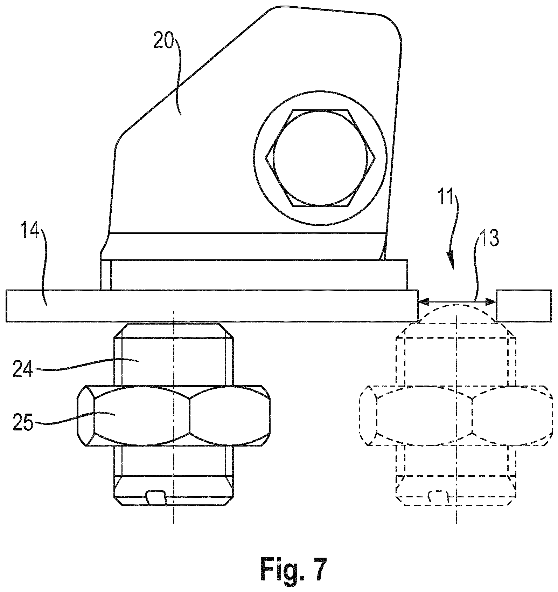

Der Bewegungsabschnitt **8** weist an der zugeordneten Rastlasche **14** eine kreisförmige Ausnehmung **11** auf, die mit der Kugel **10** korrespondiert. Dabei übersteigt ein Durchmesser **12** der Kugel **10** einen Durchmesser **13** der Ausnehmung **11,** sodass die Kugel **10** lediglich bis zu einem bestimmten, oberhalb eines gedachten Äquators angeordneten Breitenkreis der Kugel **10** über die Ausnehmung **11** hervortreten kann, wie gut anhand der **Figur 7** erkennbar ist.

Die Ausnehmung **11** ist dann deckungsgleich zu der Kugel **10** ausgerichtet, wenn sich der Kotflügel **3** in seiner Serviceposition befindet. Wenn sich der Kotflügel **3** in seiner Betriebsposition befindet, in der er über dem zugehörigen Rad **4** angeordnet ist, ist die Kugel **10** der Feststelleinrichtung **6** in die Durchführung **26** der Hohlschraube **24** zurückgezogen.

Die Kugel **10** lässt sich ausgehend von der hervorstehenden Stellung mittels einer Bewegung der Rastlasche **14** des Bewegungsabschnitts **8** der Befestigungseinrichtung **5** zurückdrängen. Dies ist dadurch möglich, dass die Kugel **10** in der hervorstehenden Stellung lediglich bis zu einem bestimmten Breitekreis in die Ausnehmung **11** des Bewegungsabschnitts **8** eingreift.

Die **Figur 7** zeigt die Feststelleinrichtung **6** in einer zurückgezogenen Position, in der die Kugel **10** vollständig in der Durchführung **26** der Hohlschraube **24** angeordnet ist, wobei das Tragelement **15** der Übersicht halber nicht in der **Figur 7** gezeigt ist. Weiterhin ist in der **Figur 7** eine vorstehende Position der Feststelleinrichtung **6** gezeigt, die durch gestrichelte Linien dargestellt ist. In dieser Position ist die Kugel **10** mittels der Federkraft der Feder **9** in die Ausnehmung **11** des Bewegungsabschnitts **8** der Befestigungseinrichtung **5** gedrückt worden. Diese Position korrespondiert mit der Serviceposition des Kotflügels **3,** in der der Kotflügel **3** von der Arbeitsmaschine **2** weggedreht ist. Der Kotflügel **3** ist mithin solange in der Serviceposition arretiert, bis eine entsprechende Kraft auf die Rastlasche **14** ausgeübt wird, die die Rastlasche **14** derart um ihre Drehachse **22** verdreht, dass die Kugel **10** in diesem Zuge in die Durchführung **26** der Hohlschraube **24** verdrängt wird.

### Bezugszeichenliste

- 1: Kotflügelsystem
- 2: Arbeitsmaschine
- 3: Kotflügel
- 4: Rad
- 5: Befestigungseinrichtung
- 6: Feststelleinrichtung
- 7: Festabschnitt
- 8: Bewegungsabschnitt
- 9: Feder
- 10: Kugel
- 11: Ausnehmung
- 12: Durchmesser
- 13: Durchmesser
- 14: Rastlasche
- 15: Tragelement
- 16: Halteelement
- 17: Verbindungselement
- 18: Außenkante
- 19: Innenkante
- 20: Winkel
- 21: Aufnahmeelement
- 22: Drehachse
- 23: Längsachse
- 24: Hohlschraube
- 25: Kontermutter
- 26: Durchführung
- 27: Auslenkungsrichtung
- 28: Längsachse

## Patentansprüche

1. Ein Kotflügelsystem (1) für eine landwirtschaftliche Arbeitsmaschine (2), insbesondere einen Traktor, umfassend
- einen Kotflügel (3) zur zumindest teilweisen Einfassung eines Rades (4) der Arbeitsmaschine (2),
- eine Befestigungseinrichtung (5) zur Befestigung des Kotflügels (3) an der Arbeitsmaschine (2) sowie
- eine Feststelleinrichtung (6) zur Feststellung der Befestigungseinrichtung (5),
wobei die Befestigungseinrichtung (5) zumindest einen Festabschnitt (7) zur Verbindung mit der Arbeitsmaschine (2) und einen Bewegungsabschnitt (8) aufweist, dem der Kotflügel (3) zugeordnet ist,
wobei der Bewegungsabschnitt (8) relativ zu dem Festabschnitt (7) bewegbar ist,
wobei der Bewegungsabschnitt (8) zumindest bei Vorliegen des Kotflügels (3) in einer Serviceposition mittels der Feststelleinrichtung (6) relativ zu dem Festabschnitt (7) arretierbar ist,
wobei die Feststelleinrichtung (6) als selbst-verriegelndes System eingerichtet ist, das den Bewegungsabschnitt (8) bei Vorliegen des Kotflügels (3) in dessen Serviceposition selbsttätig relativ zu dem Festabschnitt (7) arretiert,
**dadurch gekennzeichnet, dass**
die Feststelleinrichtung (6) an einem von Festabschnitt (7) oder Bewegungsabschnitt (8), vorzugsweise am Festabschnitt (7), eine mit einer Feder (9) vorgespannte Kugel (10) und an dem anderen von Festabschnitt (7) oder Bewegungsabschnitt (8), vorzugsweise dem Bewegungsabschnitt (8), eine mit der Kugel (10) korrespondierende Ausnehmung (11) aufweist, und ein Durchmesser (12) der Kugel (10) einen Durchmesser (13) der Ausnehmung (11) übersteigt.

2. Kotflügelsystem (1) nach Anspruch 1, **dadurch gekennzeichnet, dass** die Feder (9) in Richtung der Ausnehmung (11) vorgespannt ist, sodass sie dazu geeignet ist, die Kugel (10) in die Ausnehmung (11) zu drücken und auf diese Weise einen gewünschten Formschluss herzustellen, sobald der Kotflügel (3) seine Serviceposition erreicht.

3. Kotflügelsystem (1) nach einem der Ansprüche 1 oder 2, **dadurch gekennzeichnet, dass** die Ausnehmung (11) an einer Rastlasche (14) ausgebildet ist, wobei die Rastlasche (14) in Kraft übertragender Weise an dem Festabschnitt (7) oder dem Bewegungsabschnitt (8), vorzugsweise dem Bewegungsabschnitt (8), angeordnet ist.

4. Kotflügelsystem (1) nach einem der Ansprüche 1 bis 3, **dadurch gekennzeichnet, dass** die Feder (9) und die Kugel (10) an einem Tragelement (15) angeordnet sind, wobei das Tragelement (15) in Kraft übertragender Weise dem Festabschnitt (7) oder dem Bewegungsabschnitt (8), vorzugsweise dem Festabschnitt (7), zugeordnet ist.

5. Landwirtschaftliche Arbeitsmaschine (2), insbesondere ein Traktor, umfassend
- eine Verbrennungskraftmaschine zum Antrieb der Arbeitsmaschine (2) sowie
- zwei lenkbare Räder (4),
**gekennzeichnet durch**
zumindest ein Kotflügelsystem (1) nach einem der vorhergehenden Ansprüche, wobei das Kotflügelsystem (1) mindestens einem der Räder (4) zugeordnet ist.

## Claims

1. A mudguard system (1) for an agricultural working machine (2), in particular a tractor, comprising
- a mudguard (3) for surrounding at least part of a wheel (4) of the working machine (2),
- a mounting device (5) for mounting the mudguard (3) on the working machine (2), as well as
- a locking device (6) for locking the mounting device (5), wherein the mounting device (5) has at least one fixed section (7) for connection to the working machine (2) and a mobile section (8) which is associated with the mudguard (3),
wherein the mobile section (8) can be moved relative to the fixed section (7),
wherein, at least when the mudguard (3) is in a service position, the mobile section (8) can be stopped relative to the fixed section (7) by means of the locking device (6),
wherein the locking device (6) is configured as a self-locking system which, when the mudguard (3) is in its service position, automatically stops the mobile section (8) relative to the fixed section (7),
**characterized in that**
on one of the fixed section (7) or mobile section (8), preferably on the fixed section (7), the locking device (6) has a ball (10) which is biased by a spring (9), and on the other of the fixed section (7) or mobile section (8), preferably on the mobile section (8), the locking device has a recess (11) which corresponds to the ball (10), and a diameter (12) of the ball (10) exceeds a diameter (13) of the recess (11).

2. The mudguard system (1) according to claim 1, **characterized in that** the spring (9) is biased in the direction of the recess (11) so that it is suitable for pushing the ball (10) into the recess (11) and in this manner to produce a desired positive locking fit as soon as the mudguard (3) reaches its service position.

3. The mudguard system (1) according to one of claims 1 or 2, **characterized in that** the recess (11) is formed on a latching bracket (14), wherein the latching bracket (14) is disposed in a force-transmitting manner on the fixed section (7) or on the mobile section (8), preferably on the mobile section (8).

4. The mudguard system (1) according to one of claims 1 to 3, **characterized in that** the spring (9) and the ball (10) are disposed on a support element (15), wherein the support element (15) is associated, in a force-transmitting manner, with the fixed section (7) or the mobile section (8), preferably with the fixed section (7).

5. An agricultural working machine (2), in particular a tractor, comprising:
- an internal combustion engine for driving the working machine (2), as well as
- two steerable wheels (4),
**characterized by**
at least one mudguard system (1) according to one of the preceding claims, wherein the mudguard system (1) is associated with at least one of the wheels (4).

## Revendications

1. Un système de garde-boue (1) pour une machine de travail agricole (2), en particulier pour un tracteur, incluant
- un garde-boue (3) pour l'entourage au moins partiel d'une roue (4) de la machine de travail (2),
- un équipement de fixation (5) pour la fixation du garde-boue (3) à la machine de travail (2) ainsi que
- un équipement de blocage (6) pour le blocage de l'équipement de fixation (5),
l'équipement de fixation (5) comportant au moins une portion fixe (7) pour la liaison avec la machine de travail (2) et une portion mobile (8) à laquelle le garde-boue (3) est associé,
la portion mobile (8) étant mobile par rapport à la portion fixe (7),
la portion mobile (8) étant immobilisable au moyen de l'équipement de blocage (6) par rapport à la portion fixe (7) au moins lorsque le garde-boue (3) se trouve dans une position d'entretien,
l'équipement de blocage (6) étant agencé sous la forme d'un système autoverrouillant qui immobilise la portion mobile (8) automatiquement par rapport à la portion fixe (7) lorsque le garde-boue (3) se trouve dans sa position d'entretien,
**caractérisé en ce que**
l'équipement de blocage (6) comporte, sur l'une de la portion fixe (7) ou de la portion mobile (8), préférentiellement sur la portion fixe (7), une bille (10) précontrainte par un ressort (9) et, sur l'autre de la portion fixe (7) ou de la portion mobile (8), préférentiellement sur la portion mobile (8), un évidement (11) correspondant à la bille (10), et un diamètre (12) de la bille (10) excède un diamètre (13) de l'évidement (11).

2. Système de garde-boue (1) selon la revendication 1, **caractérisé en ce que** le ressort (9) est précontraint en direction de l'évidement (11), de sorte qu'il est apte à pousser la bille (10) dans l'évidement (11) et à établir de cette façon une liaison par complémentarité de formes souhaitée dès que le garde-boue (3) atteint sa position d'entretien.

3. Système de garde-boue (1) selon une des revendications 1 ou 2, **caractérisé en ce que** l'évidement (11) est ménagé sur une patte de crantage (14), la patte de crantage (14) étant disposée, de manière à transmettre une force, sur la portion fixe (7) ou sur la portion mobile (8), préférentiellement sur la portion mobile (8).

4. Système de garde-boue (1) selon une des revendications 1 à 3, **caractérisé en ce que** le ressort (9) et la bille (10) sont disposés sur un élément porteur (15), l'élément porteur (15) étant associé de manière à transmettre une force à la portion fixe (7) ou à la portion mobile (8), préférentiellement à la portion fixe (7).

5. Machine de travail agricole (2), en particulier un tracteur, incluant
- une machine à combustion interne pour entraîner la machine de travail (2) ainsi que
- deux roues directrices (4),
**caractérisée par**
au moins un système de garde-boue (1) selon une des revendications précédentes, le système de garde-boue (1) étant associé au moins à une des roues (4).
